# EUROPEAN PATENT APPLICATION

(11) **EP 4 131 496 A1**
(43) Date of publication of application: **08.02.2023**
(21) Application number: 21780664.5
(22) Date of filing: 23.03.2021
(51) Int. Cl.: H01M 4/525, H01M 4/36

(54) **POSITIVE ELECTRODE FOR NONAQUEOUS ELECTROLYTE SECONDARY BATTERIES, AND NONAQUEOUS ELECTROLYTE SECONDARY BATTERY**

(30) Priority: 31.03.2020 JP 2020065066
(71) Applicant: Panasonic Intellectual Property Management Co., Ltd., Osaka-shi, Osaka 540-6207 (JP)
(72) Inventor: SUZUKI, Hirotetsu, Osaka-shi, Osaka 540-6207 (JP); SAKATA, Motohiro, Osaka-shi, Osaka 540-6207 (JP)
(74) Representative: Novagraaf International SA
(86) International application number: PCT/JP2021/011952
(87) International publication number: WO 2021/200395

(57) **Abstract**

A positive electrode for a nonaqueous electrolyte secondary battery includes a composite oxide containing lithium and a transition metal, and an additive covering at least a portion of a surface of the composite oxide, wherein the additive includes a cyclic inorganic phosphoric acid compound.

## Description

### [Technical Field]

The present disclosure relates to a positive electrode for a nonaqueous electrolyte secondary battery and a nonaqueous electrolyte secondary battery.

### [Background Art]

Nonaqueous electrolyte secondary batteries represented by lithium ion secondary batteries have high energy density and high output, and expected to be promising as a power supply of mobile devices such as smart-phones, a power source of a vehicle such as an electric vehicle, and a storage device of natural energy such as sunlight. As the positive electrode active material of a nonaqueous electrolyte secondary battery, for example, a composite oxide containing lithium and a transition metal is used.

Patent Literature 1 has proposed forming a cover layer including a phosphorus compound on a surface of a composite oxide including lithium and manganese. The composite oxide is a positive electrode active material for a nonaqueous electrolyte secondary battery. For the above-described phosphorus compound, at least one selected from the group consisting of Li₃PO₄, Li₄P₂O₇, and LiPO₃(hereinafter, referred to as Li₃PO₄ and the like) is used. The above-described cover layer contains, along with the phosphorus compound, an oxide or a fluoride including at least one element selected from the group consisting of Mg, Al, and Cu.

Patent Literature 2 has proposed attaching an organic phosphoric acid compound to particle surfaces of a spinel structured composite oxide including lithium, manganese, and nickel. The composite oxide is a positive electrode active material for a nonaqueous electrolyte secondary battery. The above-described organic phosphoric acid compound is phosphoric acid triester represented by PO(OR)₃ (R is an organic group such as alkyl group, aryl group, and the like).

### [Citation List]

### [Patent Literature]

PLT1: Japanese Laid-Open Patent Publication No. 2011-187193
PLT2: WO2016/084966

### [Summary of Invention]

The Li₃PO₄ and the like described in Patent Literature 1 may coagulate during coverage by a liquid phase method, and may be distributed in an island form. The island form distribution is due to, for example, differences in the densities of the raw material and the final product during the covering process (heating and drying step) when the final product has a higher density than that of the raw material (by sintering the product densely), and gas generation involved with reaction of the raw material. For example, when using (NH₄)₂HPO₄ and Li₂CO₃ for raw materials to produce Li₃PO₄ having a higher density than that of (NH₄)₂HPO₄, the density difference between (NH₄)₂HPO₄ and Li₃PO₄ is large, and NH₃ and CO₂ gasses may be generated during reaction, which may easily cause Li₃PO₄ to coagulate. Furthermore, the organic phosphoric acid compound described in Patent Literature 2 easily seeps out into the nonaqueous electrolyte.

Distribution of Li₃PO₄ and the like in an island form and seeping of the organic phosphoric acid compound into the nonaqueous electrolyte may cause insufficient coverage of the composite oxide, and may cause reduction in cycle characteristics along with decomposition due to contacts between the nonaqueous electrolyte and composite oxide.

In view of the above, an aspect of the present disclosure relates to a positive electrode for a nonaqueous electrolyte secondary battery including a composite oxide containing lithium and a transition metal, and an additive covering at least a portion of a surface of the composite oxide, wherein the additive includes a cyclic inorganic phosphoric acid compound.

Another aspect of the present disclosure relates to a nonaqueous electrolyte secondary battery including a positive electrode, a negative electrode, and a nonaqueous electrolyte, wherein the positive electrode is the above-described positive electrode.

The present disclosure allows for improvement in cycle characteristics of nonaqueous electrolyte secondary batteries.

### [Brief Description of Drawings]

[FIG. 1]

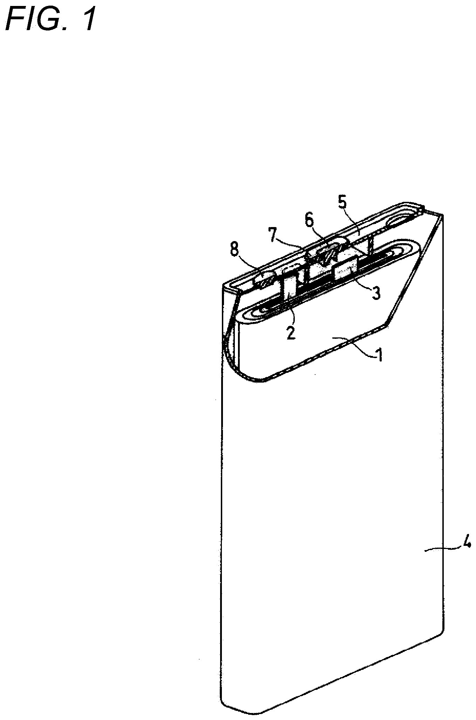

FIG. 1 is a partially cutaway oblique perspective view of a nonaqueous electrolyte secondary battery in an embodiment of the present disclosure.

### [Description of Embodiments]

### [Positive electrode for nonaqueous electrolyte secondary battery]

A positive electrode for a nonaqueous electrolyte secondary battery in an embodiment of the present disclosure includes a composite oxide containing lithium and a transition metal (positive electrode active material), an additive covering at least a portion of a surface of the composite oxide, and the additive includes a cyclic inorganic phosphoric acid compound (hereinafter, also referred to as compound A).

When the additive includes the compound A, the composite oxide surface is sufficiently and stably covered with the additive easily. In this manner, decomposition due to contacts between the nonaqueous electrolyte and composite oxide is suppressed, and cycle characteristics improve.

The compound A does not easily coagulate in the process of coverage by a liquid phase method. With the compound A, in the coverage by the liquid phase, a raw material with a small density difference from the final product, and which does not easily generate gas during reaction can be used. Furthermore, the compound A may have a cyclic structure including a plurality of P atoms, and a plurality of oxygen atoms each bonded to the plurality of P atoms may become O⁻by anion formation. In this case, the anions of the compound A easily interact with P of other inorganic phosphoric acid compound molecules surrounding them, and easily bond. Thus, when the additive includes the compound A, the composite oxide surface can be covered widely with the additive as a layer.

The compound A easily forms an anion and bonds with the transition metal of the composite oxide, and does not easily seep out into the nonaqueous electrolyte. Thus, when the additive includes the compound A, the composite oxide surface can be stably covered with the additive. The compound A also has excellent oxidation resistance, is stably present in a high potential positive electrode, and is advantageous in achieving a high output in a battery. The compound A has excellent lithium ion conductivity, and the lithium ions transfer smoothly between the composite oxide and the nonaqueous electrolyte through the cover layer including the compound A.

In view of its molecular structure, the cyclic inorganic phosphoric acid compound (e.g., cyclic polyphosphoric acid) does not easily become dense, has a small density, and does not easily coagulate, compared with chain inorganic phosphoric acid compounds (e.g., chain polyphosphoric acid). When using a raw material with a smaller density than that of a cyclic inorganic phosphoric acid compound and the chain inorganic phosphoric acid compound, the cyclic inorganic phosphoric acid compound has a smaller density difference with that of the raw material, and does not easily coagulate compared with the chain inorganic phosphoric acid compound.

The additive may include at least a compound A, and an inorganic phosphoric acid compound other than the compound A. The inorganic phosphoric acid compound other than the compound A may include Li₃PO₄, Li₄P₂O₇, and LiPO₃, and the like, or a chain polyphosphoric acid such as tetra polyphosphoric acid. A content of phosphorus (P) derived from the compound A relative to a total of the composite oxide and the additive is, for example, 0.01 mass% or more, 0.01 mass% or more and 0.5 mass% or less, or 0.1 mass% or more and 0.5 mass% or less.

The additive does not substantially include an organic phosphoric acid compound that easily seeps out into the nonaqueous electrolyte. For example, when using an aqueous solution including H₃PO₄ and LiOH for a raw material solution, the additive does not include an organic phosphoric acid compound. Even when the organic phosphoric acid compound is included, the amount of phosphorus derived from the organic phosphoric acid compound attached to 100 parts by mass of the composite oxide is, for example, 0.001 parts by mass or less. Thus, insufficient coverage by the additive of the composite oxide by seeping of the organic phosphoric acid compound into the nonaqueous electrolyte can be avoided. The amount of the organic phosphoric acid compound, which is included in the additive in the battery, seeping into the nonaqueous electrolyte can be estimated by determining the organic phosphoric acid compound content in the nonaqueous electrolyte, when the nonaqueous electrolyte does not contain the organic phosphoric acid compound at the time of nonaqueous electrolyte preparation (before injection of nonaqueous electrolyte to battery). The organic phosphoric acid compound content in the nonaqueous electrolyte is determined by gas chromatograph mass spectrometry (GC/MS) and the like.

The compound A preferably includes at least one selected from the group consisting of a cyclic polyphosphoric acid and a salt thereof. The salt of the cyclic polyphosphoric acid includes, for example, an alkali metal salt such as lithium salt. The anion of cyclic polyphosphoric acid has a plurality of O⁻ bonded to P, and easily bonds with the transition metal in the composite oxide. The cyclic polyphosphoric acid may have a composition represented by, for example, a general formula: (HPO₃)ₙ. The "n" is, for example, 3 or more and 6 or less. In particular, cyclic polyphosphoric acid preferably includes hexametaphosphoric acid (H₆P₆O₁₈) corresponding to the case of n = 6.

The compound A goes through anion formation, and easily interact and bond with the transition metal in the composite oxide, Li⁺ and H⁺ in the nonaqueous electrolyte, and P in the surrounding inorganic phosphoric acid compound, and hereinafter these components are referred to as a "transition metal in the composite oxide and the like". By bonding of the anion of the compound A with the P of the surrounding inorganic phosphoric acid compound, the composite oxide surface is easily covered widely with the additive in a layer form. By bonding of the anion of the compound A with the transition metal in the composite oxide, the composite oxide surface is stably covered with the additive. By easily bonding the anion of compound A with Li⁺ in the nonaqueous electrolyte, lithium ion transferring between the composite oxide and the nonaqueous electrolyte can be smoothly performed.

The anion of hexametaphosphoric acid has a structure represented by a formula (I) below. O⁻ bonded to P in the formula (I) may bond with the transition metal in the composite oxide and the like. It has many O⁻ to be bonded with P, and easily forms many bonds with the transition metal in the composite oxide and the like.

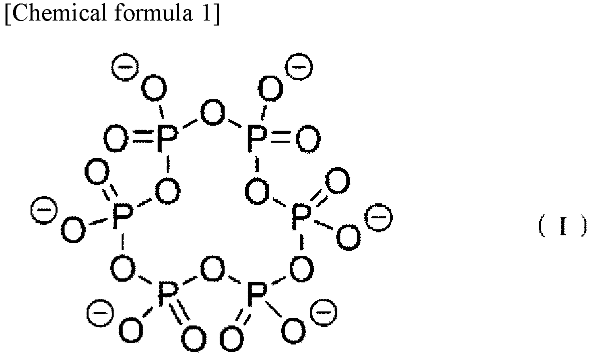

The component (compound A) of the additive covering the composite oxide surface can be confirmed, for example, by the method below.

The battery is disassembled and the positive electrode is removed. The positive electrode is washed with a nonaqueous solvent; the nonaqueous electrolyte adhering to the positive electrode is removed; and the nonaqueous solvent is removed by drying. The positive electrode mixture layer is taken from the positive electrode, suitably ground, and dispersed in water. The positive electrode mixture dispersion liquid is filtrated to obtain a filtrate as a sample solution. Also, the positive electrode material (composite oxide particle with its surface covered with an additive) may be dispersed in water, and then the positive electrode material dispersion liquid is filtrated to obtain a filtrate as a sample solution. The components included in the above-described sample solution are analyzed by X-ray diffraction (XRD). When the additive covering the composite oxide surface includes the compound A, the compound A is dissolved in the sample solution (water), and the peak attributed to the compound A can be seen in the XRD pattern. The above-described sample solution may be subjected to nuclear magnetic resonance (NMR) spectroscopy analysis.

The cover material of the composite oxide surface may also be analyzed by an XRD pattern obtained by XRD and an electron beam diffraction pattern obtained by transmission electron microscope (TEM) on the positive electrode material.

In the positive electrode, the phosphorus (P) content (P amount derived from the additive) relative to a total of the composite oxide and the additive may be 0.1 mass% or more and 0.75 mass% or less, or 0.2 mass% or more and 0.55 mass% or less. When the P content relative to a total of the composite oxide and the additive is 0.1 mass% or more, the composite oxide is sufficiently covered with the additive, which easily improves cycle characteristics. When the P content relative to a total of the composite oxide and the additive is 0.75 mass% or less, the composite oxide is sufficiently secured in the positive electrode, which easily allows for a high capacity battery.

The P content (mass ratio relative to total of composite oxide and additive) in the positive electrode can be determined by the method below.

The battery is disassembled and the positive electrode is removed. The positive electrode is washed with a nonaqueous solvent; the nonaqueous electrolyte adhering to the positive electrode is removed; and the nonaqueous solvent is removed by drying. The positive electrode mixture is taken out from the positive electrode, and a mass W1 of the positive electrode mixture is measured. The positive electrode mixture is made into a solution with a predetermined acid, and subjected to filtration to separate residues of the carbon material (acetylene black) and resin material (polyvinylidene fluoride) to obtain a sample solution. A mass W2 of the dried residue is measured. (W1-W2) is determined as a total mass of the composite oxide and additive. Using the obtained sample solution, a mass W3 of P in the sample solution is determined by inductively coupled plasma (ICP) emission spectrometry. Using the obtained (W1-W2) and W3, W3/(W1-W2) × 100 is calculated to be regarded as the above-described P content.

Also, after determining a mass WA of the positive electrode material (composite oxide particle surface with covered with an additive), the positive electrode material may be made into a solution with a predetermined acid to obtain a sample solution, a mass WB of P in the sample solution is determined by ICP emission spectroscopy, and WB/WA × 100 may be determined as the above-described P content.

The positive electrode may include a positive electrode material including composite oxide particles, and an additive including the compound A, which covers the composite oxide particle surface. The positive electrode may include a positive electrode current collector, a positive electrode mixture layer supported on the positive electrode current collector, and the positive electrode mixture layer may include the above-described positive electrode material.

The distribution state of the P in the positive electrode material can be checked by performing element analysis (element mapping) on cross sections of the positive electrode mixture layer or positive electrode material using an electron beam probe micro analyzer (EPMA) or energy dispersive X-ray (EDX) analyzer.

The positive electrode material production method includes, for example, a first step, in which a raw material solution is attached to the composite oxide particle surface, and a second step, in which the composite oxide particles with their surface having the raw material solution attached thereto are heated and dried.

The composite oxide is synthesized by using coprecipitation or the like, and for example, obtained by mixing a lithium compound with a compound containing a metal Me (transition metal) other than lithium obtained by coprecipitation or the like, and baking the obtained mixture under predetermined conditions. The composite oxide is usually forming secondary particles, in which a plurality of primary particles are agglomerated. The composite oxide particles have an average particle size (D50) of, for example, 3 µm or more and 25 µm or less. The average particle size (D50) of the composite oxide particles means a particle size (volume average particle size) at a volume integrated value of 50% in the volume-based particle size distribution measured by the laser diffraction scattering method. The first step may also serve as a step for washing the synthesized composite oxide particles. This is advantageous in terms of improved productivity.

In the first step, for example, composite oxide particles are added to the raw material solution, and the mixture is stirred to disperse the composite oxide particles in the raw material solution. The raw material solution is, for example, an aqueous solution including H₃PO₄ and LiOH, and is produced by adding a suitable amount of an aqueous LiOH solution to an aqueous H₃PO₄ solution. When the raw material solution includes an acid component such as H₃PO₄ and the like, by adding an alkaline component such as LiOH, the acid component is partly neutralized to reduce the effects from the acid component to the composite oxide. In view of easily preparing the raw material solution, the amount of the aqueous LiOH solution to be added is preferably adjusted so that the raw material solution has a pH in a range of less than 8. The amount of the composite oxide particles to be added is, for example, 500 g or more and 2000 g or less per 1L of the raw material solution.

When the raw material composition in the raw material solution (aqueous solution of H₃PO₄ and LiOH) is represented by Li_{z}H_{(3-z)}PO₄, z may be 1.0 or more and 1.8 or less, or 1.2 or more and 1.8 or less. In this case, the pH of the raw material solution is easily adjusted to be in a range of about 6 or more and less than 8. The effects from the acid component to the composite oxide can be avoided, and the composite oxide can sufficiently work as the positive electrode active material. The raw material solution can be easily prepared, and the compound A can be efficiently obtained.

When the alkaline component (LiOH and the like) used for the synthesis remained in the composite oxide, the raw material solution attached to the composite oxide surface increases the z value to some extent from the effects of the alkaline component. For example, when the raw material solution having a raw material composition with the z value of 1 is attached to the composite oxide with the remained alkaline component, the z value is increased to more than 1. The z value changes based on the mole ratio of LiOH to H₃PO₄. For example, when the aqueous LiOH solution is not added, z = 0.

The second step (heating step) works as a step in which the dispersion medium attached to the composite oxide particle surface is removed by heating and drying, and also as a step in which the raw material attached to the composite oxide particle surface is allowed to react to form the compound A. The heating temperature is, for example, 180°C or more and 450°C or less. This allows for efficient drying of the composite oxide particle surface and production of the compound A at the surface. The compound A produced during heating in the second step can be bonded to the metal Me (transition metal and the like) of the composite oxide particle as an anion.

In the second step, for example, water in the raw material solution (aqueous solution including H₃PO₄ and LiOH) attached to the composite oxide particle surface decreases by heating, and Li₃PO₄ and LiH₂PO₄ are produced to deposit. Furthermore, Li₃PO₄ and LiH₂PO₄ react to produce hexametaphosphoric acid. Water produced at the time of reaction also evaporates by heating. At this time, cyclic polyphosphoric acid other than hexametaphosphoric acid such as tetra metaphosphoric acid, and chain polyphosphoric acid such as tetra polyphosphoric acid may be produced in a small amount. Unreacted components such as Li₃PO₄ may remain in a small amount. Hexametaphosphoric acid has a smaller density than Li₃PO₄ and LiH₂PO₄, and therefore does not easily coagulate.

The positive electrode active material includes a composite oxide containing lithium and a metal Me other than lithium. The metal Me includes at least a transition metal. The transition metal may include at least one element selected from the group consisting of nickel (Ni), cobalt (Co), manganese (Mn), iron (Fe), copper (Cu), chromium (Cr), titanium (Ti), niobium (Nb), zirconium (Zr), vanadium (V), tantalum (Ta), and molybdenum (Mo).

The metal Me may include a metal other than a transition metal. The metal other than the transition metal may include at least one selected from the group consisting of aluminum (Al), magnesium (Mg), calcium (Ca), strontium (Sr), zinc (Zn), and silicon (Si). In addition to the metal, the composite oxide may further include boron (B) or the like.

In view of achieving a high capacity, the transition metal preferably includes at least Ni. The metal Me may include Ni and at least one selected from the group consisting of Co, Mn, Al, Ti, and Fe. In view of increasing the capacity and output, among others, the metal Me preferably contains Ni and at least one selected from the group consisting of Co, Mn, and Al, and more preferably contains Ni, Co, and Mn and/or Al. When the metal Me contains Co, the phase transition of the composite oxide containing Li and Ni is suppressed during charge and discharge, the stability of the crystal structure is improved, and the cycle characteristics are easily improved. When the metal Me contains Mn and/or Al, the thermal stability is improved.

In view of easily increasing the capacity, in the composite oxide, the atomic ratio of Ni to the metal Me: Ni/Me is preferably 0.3 or more and less than 1, more preferably 0.5 or more and less than 1, and still more preferably 0.75 or more and less than 1.

In view of improving cycle characteristics and obtaining higher output, the positive electrode active material may include a composite oxide having a layered rock salt type crystal structure and containing Ni and/or Co, or a composite oxide having a spinel type crystal structure and containing Mn. In view of a higher capacity, in particular, preferred is a composite oxide having a layered rock salt type crystal structure and containing Ni, and having an atomic ratio of Ni relative to metal Me: Ni/Me of 0.3 or more (hereinafter, the composite oxide is also referred to as a nickel-based composite oxide).

The additive including the compound A covering the composite oxide surface is excellent in lithium ion conductivity, and allows the composite oxide to smoothly absorb and release lithium ions. Also, by including the alkaline component in the raw material solution, upon coverage with the additive including the compound A, deterioration of the composite oxide by the acid component in the raw material solution is suppressed. Thus, when covering the nickel-based composite oxide surface with the additive including the compound A, the high capacity of the positive electrode including the nickel-based composite oxide can be sufficiently brought out.

The nickel-based composite oxide has a relatively unstable crystal structure, is prone to deterioration due to elution of Ni caused by contacts with the nonaqueous electrolyte in a high potential positive electrode, and easily reduces cycle characteristics. Thus, in the case of the nickel-based composite oxide, improvement effects of cycle characteristics by the coverage of the composite oxide surface with the additive including the compound A are significant. Also, the Ni-based composite oxide may exhibit alkalinity by the remaining alkaline component used for the synthesis, and deterioration of the composite oxide by the acid component in the raw material solution used for covering the composite oxide surface with the additive is easily suppressed.

The composite oxide may have a composition having a layered rock salt type crystal structure, and represented by a general formula (1): LiNi_{α}M_{1-α}O₂ (0.3 ≤ α < 1 is satisfied, and M is at least one element selected from the group consisting of Co, Mn, Al, Ti, and Fe). When α is in the above-described range, the effect of Ni and the effect of element M can be obtained in a well-balanced manner.

In view of obtaining improvement in cycle characteristics, a higher capacity and higher output, the composite oxide may have a composition having a layered rock salt type crystal structure and represented by a general formula (2): LiNiₓCo_{y}M_{1-x-y}O₂. In the general formula (2), 0.3 ≤ x < 1, 0 < y ≤ 0.5, and 0 < 1-x-y ≤ 0.35 are satisfied, and M is at least one selected from the group consisting of Al and Mn. In this case, the effect of Ni, the effect of Co, and the effect of element M can be obtained in a well-balanced manner. When covering the surface of the composite oxide represented by the general formula (2) with the additive including the compound A, the high capacity of the composite oxide can be sufficiently brought out. In particular, M is preferably Al in the general formula (2). The value of x may be in the range of 0.5 ≤ x< 1. The value of y may be in the range of 0 < y ≤ 0.35.

In view of improvement in cycle characteristics and a higher output, the composite oxide may have a spinel structured crystal structure, and a composition represented by a general formula (3): LiMn_{β}Ni_{2-β}O₄ (0.1 ≤ β < 2). Also, in the general formula (3), β is 0.5 or more and less than 2.

### [Nonaqueous electrolyte secondary battery]

The nonaqueous electrolyte secondary battery of an embodiment of the present disclosure includes a positive electrode, a negative electrode, and a nonaqueous electrolyte, and the positive electrode is the above-described positive electrode.

Hereinafter, the configuration of the nonaqueous electrolyte secondary battery will be described more specifically.

### (Positive Electrode)

The positive electrode includes, for example, a positive electrode current collector and a positive electrode mixture layer supported on the surface of the positive electrode current collector. The positive electrode mixture layer can be formed by applying a positive electrode slurry in which the positive electrode mixture is dispersed in a dispersion medium on a surface of the positive electrode current collector, and drying the slurry. The dried coating film may be rolled, if necessary. The positive electrode mixture layer may be formed on one surface of the positive electrode current collector, or may be formed on both surfaces thereof. The positive electrode mixture includes, as an essential component, the above-described positive electrode material. The positive electrode mixture may include, as an optional component, a binder, conductive agent, and the like. Examples of the dispersion medium include N-methyl-2-pyrrolidone (NMP).

Examples of the binder include resin materials such as, for example, fluororesin, polyolefin resin, polyamide resin, polyimide resin, acrylic resin, and vinyl resin. Examples of the fluororesin include polytetrafluoroethylene (PTFE), and polyvinylidene fluoride (PVDF). A kind of binder may be used singly, or two or more kinds thereof may be used in combination.

Examples of the conductive agent include carbon blacks such as acetylene black; conductive fibers such as carbon fibers and metal fibers; and carbon fluoride. A kind of conductive agent may be used singly, or two or more kinds thereof may be used in combination.

As the positive electrode current collector, for example, a metal foil can be used. As a metal composing the positive electrode current collector, aluminum (Al), titanium (Ti), alloys containing these metal elements, and stainless steel are exemplified. The thickness of the positive electrode current collector is not particularly limited, but is, for example, 3 to 50 µm.

### (Negative Electrode)

The negative electrode may include a negative electrode current collector and a negative electrode mixture layer supported on the surface of the negative electrode current collector. The negative electrode mixture layer can be formed, for example, by applying a negative electrode slurry in which the negative electrode mixture is dispersed in a dispersion medium on a surface of the negative electrode current collector and drying the slurry. The dried coating film may be rolled, if necessary. The negative electrode mixture layer may be formed on one surface of the negative electrode current collector, or on both surfaces thereof. As the dispersion medium, for example, water or NMP is used.

The negative electrode mixture contains a negative electrode active material as an essential component, and may contain a binder, a conductive agent, a thickener, and the like as an optional component. As the binder and the conductive agent, those exemplified for the positive electrode may be used. For the binder, rubber materials such as a styrene-butadiene copolymer rubber (SBR) may be used. Examples of the thickener include carboxymethylcellulose (CMC) and a modified product thereof (such as Na salts).

The negative electrode active material may contain a carbon material which absorbs and releases lithium ions. Examples of the carbon material absorbing and releasing lithium ions include graphite (natural graphite, artificial graphite), non-graphitizable carbon (soft carbon), and graphitizable carbon (hard carbon). Preferred among them is graphite, which is excellent in stability during charging and discharging and has a small irreversible capacity.

The negative electrode active material may include an alloy-type material. The alloy-type material is a material containing at least one kind of metal capable of forming an alloy with lithium, and includes, for example, silicon, tin, a silicon alloy, a tin alloy, and a silicon compound. For the silicon compound, a composite material having a lithium ion conductive phase and silicon particles dispersed in the phase may be used. As the lithium ion conductive phase, a silicate phase such as a lithium silicate phase, a silicon oxide phase in which 95 mass% or more is silicon dioxide, and/or a carbon phase, may be used.

As the negative electrode active material, the alloy-type material and the carbon material can be used in combination. In this case, the ratio of the carbon material to the total of the alloy-type material and the carbon material is, for example, preferably 80 mass% or more, and more preferably 90 mass% or more.

The shape and thickness of the negative electrode current collector can be selected from the shapes and ranges according to the positive electrode current collector. As a metal composing the negative electrode current collector, copper (Cu), nickel (Ni), iron (Fe), and an alloy containing any of these metal elements may be exemplified.

### (Nonaqueous Electrolyte)

The nonaqueous electrolyte contains a nonaqueous solvent, and a lithium salt dissolved in the nonaqueous solvent. Preferably, the lithium salt concentration of the nonaqueous electrolyte is, for example, 0.5 mol/L or more and 2 mol/L or less. With the lithium salt concentration set to be within the above-described range, a nonaqueous electrolyte having an excellent ion conductivity and a suitable viscosity can be prepared. However, the lithium salt concentration is not limited to the above-described range.

As the nonaqueous solvent, a cyclic carbonate, a chain carbonate, a cyclic carboxylate, and a chain carboxylate are exemplified. Examples of the cyclic carbonate include propylene carbonate (PC), ethylene carbonate (EC). The cyclic carbonate may include fluorinated cyclic carbonate such as fluoroethylene carbonate (FEC), and cyclic carbonate having a carbon-carbon unsaturated bond such as vinylene carbonate (VC), and vinyl ethylene carbonate. Examples of the chain carbonate include diethyl carbonate (DEC), ethyl methyl carbonate (EMC), dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate, ethyl acetate, propyl acetate, methyl propionate, ethyl propionate, and propyl propionate. A kind of nonaqueous solvent may be used singly, or two or more kinds thereof may be used in combination.

As the lithium salt, known lithium salts may be used. Examples of the preferable lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylates, LiCl, LiBr, LiI, borates, and imide salts. Examples of the borates include lithium bis(1,2-benzenediolate (2-)-O,O') borate, lithium bis(2,3-naphthalenediolate (2-)-O,O') borate, lithium bis(2,2'-biphenyldiolate (2-)-O,O') borate, and lithium bis(5-fluoro-2-olate-1-benzenesulfonic acid-O,O') borate. Examples of the imide salts include lithium bis(fluorosulfonyl) imide (LiN(FSO₂)₂), lithium bis(trifluoromethyl sulfonyl) imide (LiN(CF₃SO₂)₂), lithium trifluoromethyl sulfonyl nonafluorobutyl sulfonyl imide (LiN(CF₃SO₂) (C₄F₉SO₂)), and lithium bis(pentafluoroethyl sulfonyl) imide (LiN(C₂F₅SO₂)₂). A kind of lithium salt may be used singly, or two or more kinds thereof may be used in combination.

### (Separator)

Usually, it is desirable to interpose a separator between the positive electrode and the negative electrode. The separator has excellent ion permeability and suitable mechanical strength and electrically insulating properties. As the separator, there may be used, a microporous thin film, a woven fabric, a nonwoven fabric, and the like. The separator is preferably made of polyolefin such as polypropylene and polyethylene.

In an example of a structure of the nonaqueous electrolyte secondary battery, an electrode group and a nonaqueous electrolyte are accommodated in an outer package, and the electrode group has a positive electrode and a negative electrode wound with a separator interposed therebetween. Alternatively, instead of the wound-type electrode group, other forms of electrode groups may be applied, such as a laminated electrode group in which the positive electrode and the negative electrode are laminated with a separator interposed therebetween. The nonaqueous electrolyte secondary battery may be any shape, for example, a cylindrical type, a rectangular type, a coin-type, a button type, or a laminate type.

FIG. 1 is a partially cutaway oblique perspective view of a nonaqueous electrolyte secondary battery in an embodiment of the present disclosure.

The battery includes a bottomed rectangular battery case 4, and an electrode group 1 and a nonaqueous electrolyte accommodated in the battery case 4. The electrode group 1 has a negative electrode in the form of a long strip, a positive electrode in the form of a long strip, and a separator interposed therebetween for preventing direct contact therebetween. The electrode group 1 is formed by winding the negative electrode, the positive electrode, and the separator around a flat core and removing the core.

One end of a negative electrode lead 3 is attached to a negative electrode current collector of the negative electrode by welding or the like. The other end portion of the negative electrode lead 3 is electrically connected to a negative electrode terminal 6 provided in a sealing plate 5 through a resin insulating plate. The negative electrode terminal 6 is insulated from the sealing plate 5 by a gasket 7 made of a resin. To a positive electrode current collector of the positive electrode, one end of a positive lead 2 is attached by welding or the like. The other end of the positive lead 2 is connected to the rear surface of the sealing plate 5 through an insulating plate. That is, the positive electrode lead 2 is electrically connected to the battery case 4 which also serves as the positive electrode terminal. The insulating plate separates the electrode group 1 and the sealing plate 5 and separates the negative electrode lead 3 and the battery case 4. The periphery of the sealing plate 5 is fitted to the open end of the battery case 4, and the fitting portion is laser welded. In this manner, the opening of the battery case 4 is sealed by the sealing plate 5. The injection hole for the nonaqueous electrolyte provided in the sealing plate 5 is plugged by a sealing plug 8.

In the following, the present disclosure will be described in detail based on Examples and Comparative Examples, but the present invention is not limited to Examples below.

### <Examples 1 to 5>

### [Positive electrode material production]

Surfaces of composite oxide particle (average particle size (D50) 11.1 µm) were covered with an additive including the compound A by a liquid phase method based on the following processes: the composite oxide was a layered rock salt type, and had a composition of LiNi_{0.9}Co_{0.05}Al_{0.05} (NCA).

First, an aqueous LiOH solution (concentration 1 mol/L) was added to an aqueous H₃PO₄ solution (concentration 1 mol/L) to produce a raw material solution (aqueous solution including H₃PO₄ and LiOH). The amount of the aqueous LiOH solution to be added to the aqueous H₃PO₄ solution was adjusted so that the value of z was as shown in Table 1, when the raw material composition in the raw material solution is represented by Li_{z}H_{(3-Z)}PO₄. The aqueous LiOH solution was added in an amount so that the raw material solution had a pH of less than 8.

The composite oxide particles were added to the raw material solution. The composite oxide particles were added in an amount of 1250 g per 1L of the raw material solution. The raw material solution including the composite oxide particles was stirred for 15 minutes to disperse the composite oxide particles in the raw material solution. Afterwards, the composite oxide particles in the dispersion liquid were separated by filtration, and the composite oxide particles having the raw material solution attached to their surfaces were heated at 450°C for 3 hours to dry. A positive electrode material with the composite oxide particle surface covered with the additive was produced in this manner. The positive electrode material had a P content of 0.21 mass% as determined by the above described method.

### [Positive Electrode Production]

To the positive electrode mixture, N-methyl-2-pyrrolidone (NMP) was added, and stirred to prepare a positive electrode slurry. As the positive electrode mixture, a mixture of the positive electrode material obtained as described above, acetylene black (AB), and polyvinylidene fluoride (PVDF) was used. In the positive electrode mixture, the mass ratio of the positive electrode material, AB, and PVDF was set to 100:2:2.

The positive electrode slurry was applied to the surface of aluminum foil as a positive electrode current collector, and the coating film was dried, and then rolled to form a positive electrode with a positive electrode mixture layer (thickness 40 µm, density 3.6 g/cm³) formed on both surfaces of the aluminum foil. In Table 1, the positive electrodes of Examples 1 to 5 correspond to a1 to a5, respectively.

### [Negative Electrode Production]

Water was added to the negative electrode mixture and stirred to prepare a negative electrode slurry. A mixture of artificial graphite (average particle size 20 µm), styrene-butadiene rubber (SBR), and sodium carboxymethyl cellulose (CMC-Na) was used for the negative electrode mixture. In the negative electrode mixture, the mass ratio of artificial graphite, SBR, and CMC-Na was set to 100:1:1. The negative electrode slurry was applied to the surface of a copper foil, and the coating was dried and then rolled to form a negative electrode with negative electrode mixture layers (thickness 80 µm, density 1.6 g/cm³) formed on both surfaces of the copper foil.

### [Nonaqueous Electrolyte Preparation]

LiPF₆ was dissolved in a solvent mixture (volume ratio 2:8) of fluoro ethylene carbonate (FEC) and dimethyl carbonate (DMC) to give a concentration of 1 mol/L, thereby producing a nonaqueous electrolyte.

### [Nonaqueous Electrolyte Secondary Battery Production]

An Al-made positive electrode lead was attached to the positive electrode produced as described above. A Ni-made negative electrode lead was attached to the negative electrode produced as described above. The positive electrode and the negative electrode were wound with a polyethylene thin film (separator) interposed therebetween into a spiral shape in an inert gas atmosphere, thereby producing a wound-type electrode group. The electrode group was accommodated in a bag-type outer package formed of a laminate sheet including an Al layer, the above-described nonaqueous electrolyte was injected, and then the outer package was sealed, thereby producing a nonaqueous electrolyte secondary battery. Upon accommodating the electrode group in the outer package, a portion of the positive electrode lead and a portion of the negative electrode lead were allowed to be exposed to the outside of the outer package. In Table 1, the batteries of Examples 1 to 5 correspond to A1 to A5, respectively.

### <Examples 6 to 10>

Positive electrodes a6 to a10 of Examples 6 to 10 were produced in the same manner as the positive electrodes a1 to a5 of Examples 1 to 5, except that in the positive electrode production, the raw material solution (aqueous solution including H₃PO₄ and LiOH) concentration was changed so that the P content in the positive electrode material was set to the value shown in Table 1. The P content in the positive electrode material determined by the method described was 0.1 mass%. Batteries A6 to A10 of Examples 6 to 10 were produced in the same manner as the battery A1 of Example 1, except that positive electrodes a6 to a10 were used instead of the positive electrode a1.

### <Examples 11 to 13>

Positive electrodes a11 to a13 of Examples 11 to 13 were produced in the same manner as the positive electrode a3 to a5 of Examples 3 to 5, except that in the positive electrode production, the heating temperature of the composite oxide particle separated from the dispersion liquid was 180°C. The P content in the positive electrode material determined by the method described was 0.2 mass%. Batteries A11 to A13 of Examples 11 to 13 were produced in the same manner as the battery A1 of Example 1, except that instead of the positive electrode a1, the positive electrodes a11 to a13 were used.

### <Comparative Example 1>

A positive electrode b1 of Comparative Example 1 was produced in the same manner as the positive electrode a1 of Example 1, except that in the positive electrode production, the composite oxide surface was not covered with the additive. A battery B1 of Comparative Example 1 was produced in the same manner as the battery A1 of Example 1, except that instead of the positive electrode a1, a positive electrode b1 was used.

The batteries A1 to A13 and battery B1 produced as described above were evaluated as below.

### [Evaluation: charge/discharge cycle test]

Constant current charging was performed at a current of 0.3 C until the voltage reached 4.4 V, and thereafter, constant voltage charging was performed at a voltage of 4.4 V until the electric current reached 0.05 C. Afterwards, constant current discharging was performed at a current of 0.5 C until the voltage reached 2.5 V. The batteries were allowed to rest for 10 minutes between the charging and discharging. The charge/discharge were conducted under an environment of 25°C.

Setting the above-described charge/discharge as 1 cycle, 100 cycles were performed. The ratio of the discharge capacity at the 100th cycle relative to the discharge capacity at the 1st cycle was determined as a capacity retention rate. The initial capacity in Table 1 is the discharge capacity at the 1st cycle.

The evaluation results are shown in Table 1.

**[Table 1]**

| Batter y | Positi ve electr ode | Compo site oxide | Coverage with Additive | | | Evaluation | |
|---|---|---|---|---|---|---|---|
| | | | Raw material composition Li_{z}H_{(3-z)}PO₄ | Heati ng tempe rature (°C) | P Content (mass% ) | Initial capacity (mAh/g) | 100th Cycle Capacity retention rate (%) |
| A1 | a1 | NCA | z=1.0 | 450 | 0.21 | 198.3 | 84.6 |
| A2 | a2 | T | z=1.2 | T | T | 198.1 | 84.8 |
| A3 | a3 | T | z=1.4 | T | T | 200.6 | 86.5 |
| A4 | a4 | T | z=1.6 | T | T | 200.9 | 86.6 |
| A5 | a5 | T | z=1.8 | T | T | 199.5 | 86.7 |
| A6 | a6 | T | z=1.0 | T | 0.10 | 199.0 | 84.0 |
| A7 | a7 | T | z=1.2 | T | T | 198.9 | 84.6 |
| A8 | a8 | T | z=1.4 | T | T | 198.2 | 84.9 |
| A9 | a9 | T | z=1.6 | T | T | 197.7 | 84.9 |
| A10 | a10 | T | z=1.8 | T | T | 197.5 | 85.5 |
| A11 | a11 | T | z=1.4 | 180 | 0.20 | 198.2 | 84.2 |
| A12 | a12 | T | z=1.6 | T | T | 197.7 | 84.4 |
| A13 | a13 | T | z=1.8 | T | T | 197.5 | 85.1 |
| B1 | b1 | T | - | - | - | 203.1 | 83.4 |

For the positive electrodes a1 to a13, the components of the additive covering the composite oxide particle surface were checked by the method described above. As a result, it was confirmed that all contained hexametaphosphoric acid (Li₆P₆O₁₈) as the compound A, lithium orthophosphate (Li₃PO₄), and lithium pyrophosphate (Li₄P₂O₇).

The batteries A1 to A13 had a high initial capacity, and also had a high capacity retention rate compared with the battery B1. The battery A4 was also subjected to charge/discharge as described above under an environment of 45°C to determine its initial capacity, and it was found that the initial capacity was 219.7 mAh/g, which was an increased value compared with the initial capacity when charge/discharge was performed at 25°C, and that the composite oxide worked fully as the active material. In this manner, by adding the LiOH alkaline component at the time of the raw material solution preparation, it was confirmed that effects from the acid component to the composite oxide were sufficiently reduced.

### <Examples 14 to 16>

Positive electrodes c1 to c3 of Examples 14 to 16 were produced in the same manner as the positive electrodes a1, a2, and a5 in Examples 1, 2, 5, except that in the positive electrode production, layered rock salt type composite oxide particles (average particle size (D50) 13 µm) having a composition of LiNi_{0.5}Co_{0.2}Mn_{0.3}(NCM) were produced instead of the NCA composite oxide particles. The P content in the positive electrode material determined by the method described was 0.23 mass%. Batteries C1 to C3 of Examples 14 to 16 were produced in the same manner as the battery A1 of Example 1, except that instead of the positive electrode a1, the positive electrodes c1 to c3 were used.

### <Example 17>

A positive electrode c4 of Example 17 was produced in the same manner as the positive electrode c2 of Example 15, except that in the positive electrode production, the raw material solution (aqueous solution including H₃PO₄ and LiOH) concentration was changed, and the P content in the positive electrode material was set to the value shown in Table 2. The P content in the positive electrode material determined by the method described was 0.52 mass%. A battery C4 of Example 17 was produced in the same manner as the battery A1 of Example 1, except that instead of the positive electrode a1, the positive electrode c4 was used.

### <Example 18>

A positive electrode c5 of Example 18 was produced in the same manner as the positive electrode c2 of Example 15, except that in the positive electrode production, the raw material solution (aqueous solution including H₃PO₄ and LiOH) concentration was changed, and the P content in the positive electrode material was set to the value shown in Table 2. The P content in the positive electrode material determined by the method described was 0.73 mass%. A battery C5 of Example 18 was produced in the same manner as the battery A1 of Example 1, except that instead of the positive electrode a1, the positive electrode c5 was used.

### <Comparative Example 2>

A positive electrode d1 of Comparative Example 2 was produced in the same manner as the positive electrode c1 of Example 14, except that in the positive electrode production, the composite oxide particle surface was not covered with the additive. A battery D1 of Comparative Example 2 was produced in the same manner as the battery A1 of Example 1, except that instead of the positive electrode a1, the positive electrode d1 was used.

The batteries C1 to C5 of Examples 14 to 18 and the battery D1 of Comparative Example 2 produced as described above were evaluated in the same manner as the battery A1 of Example 1. The evaluation results are shown in Table 2.

**[Table 2]**

| Battery | Positive electrode | Composite oxide | Coverage with additive | | | Evaluation | |
|---|---|---|---|---|---|---|---|
| | | | Raw material composition Li_{z}H_{(3-z})PO₄ | Heatin g temper ature (°C) | P Content (mass%) | Initial capacity (mAh/g) | 100th Cycle Capacity retention rate (%) |
| C1 | c1 | NCM | z=1.0 | 450 | 0.23 | 178.5 | 83.3 |
| C2 | c2 | T | z=1.2 | T | T | 178.3 | 82.0 |
| C3 | c3 | T | z=1.8 | T | T | 177.4 | 80.3 |
| C4 | c4 | T | z=1.2 | T | 0.52 | 177.0 | 78.5 |
| C5 | c5 | T | z=1.2 | T | 0.73 | 175.6 | 82.3 |
| D1 | d1 | T | - | - | - | 175.2 | 69.9 |

For the positive electrodes c1 to c5, the components of the additive covering the composite oxide particle surface were checked by the method described above. As a result, it was confirmed that all contained hexametaphosphoric acid (Li₆P₆O₁₈) as the compound A, lithium orthophosphate (Li₃PO₄), and lithium pyrophosphorate (Li₄P₂O₇).

The batteries C1 to C5 had a high initial capacity, and also had a high capacity retention rate compared with the battery D1.

### <Examples 19 to 20>

Positive electrodes e1 to e2 of Examples 19 to 20 were produced in the same manner as the positive electrode a2 of Example 2, except that in the positive electrode production, composite oxide particles (average particle size (D50) 9 µm) having a composition of LiMn_{1.5}Ni_{0.5}O₄(MnNi-based spinel structure) were used instead of the NCA composite oxide particles. The P content in the positive electrode material determined by the method described was 0.21 mass%. Batteries E1 to E2 of Examples 19 to 20 were produced in the same manner as the battery A1 of Example 1, except that the positive electrodes e1 to e2 were used instead of the positive electrode a1.

### <Comparative Example 3>

A positive electrode f1 of Comparative Example 3 was produced in the same manner as the positive electrode e1 of Example 19, except that in the positive electrode production, the composite oxide particle surface was not covered with the additive. A battery F1 of Comparative Example 3 was produced in the same manner as the battery A1 of Example 1, except that positive electrode f1 was used instead of the positive electrode a1.

The batteries E1 to E2 of Examples 19 to 20 and the battery F1 of Comparative Example 3 produced as described above were evaluated in the same manner as the battery A1 of Example 1. The evaluation results are shown in Table 3.

**[Table 3]**

| Battery | Positiv e electro de | Composite oxide | Coverage with additive | | | Evaluation | |
|---|---|---|---|---|---|---|---|
| | | | Raw material composition Li_{z}H_{(3-z})PO₄ | Heati ng tempe rature (°C) | P Content (mass%) | Initial capacity (mAh/g) | 100th Cycle Capacity retention rate (%) |
| E1 | e1 | MnNi-based spinel structu re | z=1.2 | 450 | 0.21 | 138.5 | 94.4 |
| E2 | e2 | T | z=1.2 | T | T | 138.0 | 94.1 |
| F1 | f1 | T | - | - | - | 139.3 | 92.9 |

For the positive electrodes e1 to e2, the components of the additive covering the composite oxide particle surface were checked by the method described above. As a result, it was confirmed that all contained hexametaphosphoric acid (Li₆P₆O₁₈) as the compound A, lithium orthophosphate (Li₃PO₄), and lithium pyrophosphorate (Li₄P₂O₇).

The batteries E1 to E2 had a high capacity retention rate compared with the battery F1.

### [Industrial Applicability]

The nonaqueous electrolyte secondary battery according to the present disclosure is preferably used as, for example, a power supply of a mobile device such as a smart phone, a power source of a vehicle such as an electric vehicle, or a storage device of natural energy such as sunlight.

### [Reference Signs List]

1 Electrode Group
2 Positive Electrode Lead
3 Negative Electrode Lead
4 Battery Case
5 Sealing Plate
6 Negative Electrode Terminal
7 Gasket
8 Sealing Plug

## Claims

1. A positive electrode for a nonaqueous electrolyte secondary battery comprising a composite oxide containing lithium and a transition metal, and an additive covering at least a portion of a surface of the composite oxide, wherein
the additive includes a cyclic inorganic phosphoric acid compound.

2. The positive electrode for a nonaqueous electrolyte secondary battery of claim 1, wherein the phosphoric acid compound includes at least one selected from the group consisting of a cyclic polyphosphoric acid and a salt thereof.

3. The positive electrode for a nonaqueous electrolyte secondary battery of claim 2, wherein the cyclic polyphosphoric acid include hexametaphosphoric acid.

4. The positive electrode for a nonaqueous electrolyte secondary battery of any one of claims 1 to 3, wherein a phosphorus content relative to a total of the composite oxide and the additive is 0.1 mass% or more and 0.75 mass% or less.

5. The positive electrode for a nonaqueous electrolyte secondary battery of any one of claims 1 to 4, wherein
the composite oxide has a layered rock salt type crystal structure, and has a composition represented by a general formula: LiNiₓCo_{y}M_{1-x-y}O₂, in the general formula, 0.3 ≤ x< 1, 0< y ≤ 0.5, and 0< 1-x-y ≤ 0.35 are satisfied, and M is at least one selected from the group consisting of Al and Mn.

6. A nonaqueous electrolyte secondary battery including a positive electrode, a negative electrode, and a nonaqueous electrolyte, wherein the positive electrode is the positive electrode of any one of claims 1 to 5.
